# EUROPEAN PATENT SPECIFICATION

(11) **EP 2 827 399 B1**
(45) Date of publication and mention of the grant of the patent: **07.11.2018**
(21) Application number: 14153791.0
(22) Date of filing: 04.02.2014
(51) Int. Cl.: H01M 2/02, H01M 2/04

(54) **Rechargeable battery**
Wiederaufladbare Batterie
Batterie rechargeable

(30) Priority: 19.07.2013 US 201361856269 P; 28.01.2014 US 201414166693
(43) Date of publication of application: 21.01.2015
(73) Proprietor: Samsung SDI Co., Ltd., Yongin-si, Gyeonggi-do (KR)
(72) Inventor: Kwak, Yoon-Tai, Yongin-si, Gyeonggi-do (KR); Hwangbo, Yup, Yongin-si, Gyeonggi-do (KR)
(74) Representative: Gulde & Partner

(56) References cited:
- EP-A2- 2 175 506
- JP-A- H10 144 268
- JP-A- 2001 155 698
- JP-A- 2004 195 490
- JP-A- 2011 181 215
- US-A1- 2011 064 996

## Description

### BACKGROUND

### 1. Field

The present invention relates to a rechargeable battery in which a cap plate is coupled with a case and by welding.

### 2. Description of the Related Art

A rechargeable battery is a battery that can repeatedly perform charging and discharging unlike a primary battery. A rechargeable battery having a small capacity may be used in a portable small electronic device such as a mobile phone, a laptop computer, and a camcorder. A rechargeable battery having a large capacity may be used as a power source for driving a motor of hybrid and electric vehicles.

For example, the rechargeable battery comprises an electrode assembly performing charging and discharging, a case receiving the electrode assembly and an electrolyte solution, a cap plate fastened to an opening of the case, and an electrode terminal provided in the cap plate to be electrically connected to the electrode assembly.

When assembling the battery, the cap plate is to be attached to the case and at least sectionwise to be inserted into the opening of the case. Due to possible size toleranzes, a shape of the case in the area of the opening may be non-uniform due to a technical limits. Accordingly, the cap plate is difficult to be seated in the opening and may be over-inserted into the opening.

Rechargeable batteries are disclosed e.g. in US 2011/064996 A1, JP H10 144268, JP H10 181215, JP 2004-195490, JP 2001 155698 A and EP 2 175 506 A2.

The above information disclosed in this Background section is only for enhancement of understanding of the background of the described technology and therefore it may contain information that does not form the prior art that is already known in this country to a person of ordinary skill in the art.

### SUMMARY

It is an object of the described invention to provide a rechargeable battery in which when a cap plate is coupled with a case, safe seating of the cap plate in an opening of the case is induced and over-insertion of the cap plate is prevented.

For a rechargeable battery mentioned above and comprising a case, in which an electrode assembly is arranged, the case comprising a circumferential edge section that extends around an opening of the case, and a cap plate that is welded to the case and that closes the opening, wherein the cap plate is formed with an inner side facing the electrode assembly, an outer side opposite the inner side, and lateral sides between the inner and the outer side, and with two long and two short lateral sides, and wherein the cap plate comprises at least one protrusion, wherein a length of the protrusion is smaller than a wall thickness of the circumferential edge section, the protrusion projecting from one of the lateral sides and parallel to the inner side, wherein the protrusion is arranged at at least one of the short lateral sides.

This simple solution provides for a good mountability of the cap plate, as the position of the protrusion with respect to the edge section can easily be detected and for instance inspected. Furthermore, the cap plate can be better welded to the case and in particular to the edge section, as the material of the edge section and of the protrusion can be more homogeneously welded together compared to cap plates without any protrusions.

In particular as the length of the protrusion is smaller than the wall thickness of the edge section, both, the protrusion and the edge section are at least sectionswise fuzed during the welding process for comparable rated, the fuzed sections being well in contact with each other.

The solutions according to the invention can be combined as desired and further improved by the further following embodiments that are advantageous on their own, in each case.

According to a first possible embodiment, the circumferential edge section may be formed with a groove for accommodating the protrusion. The groove facilitates positioning the cap palte with respect to the edge section. In particular, the groove and the protrusion may essentially be formed complementary to each other and may be dimensioned such that the protrusion can be positioned in the groove with little or no play. By this, the position of the cap plate is precisely predetermined. Movements of the cap plate relative to the case are at least limited or even blocked, such that an overinsertion can at least be easily detected or even be avoided, if the protrusion is placed in the groove.

The cap plate is preferably formed with an inner side facing the electrode assembly, an outer side opposite the inner side, and lateral sides between the inner and the outer side. The protrusion may project from one of the lateral sides and parallel to the inner side. Such a cap plate can easily be prodruced, e.g. by stamping or punching.

Furthermore, the cap plate can be formed with two long and two short lateral sides, wherein the protrusion is arranged at at least one of the short lateral sides. Hence, the design of the cap plate can be flexibly adapted to the case at which it is attached.

At least two protrusions can be provided, wherein one of the at least two protrusions is arranged at one of the lateral sides and another one of the at least two protrusions is arranged at the opposite lateral side. With one protrusion at each of the opposite lateral sides, a stable seating of the cap plate in the opening is provided.

The at least one protrusion may extend away from the cap plate. In particular, the protrusions can project from the lateral sides away from each other. Such protrusions are visibly inspectable if inserted in the grooves, which simplifies manual or automatic inspection of the position of the cap plate.

Preferably, at least one protrusion projects from each of the lateral sides, thereby improving weldability at all sides of the cap plate.

A thickness of the protrusion perpendicular to the inner side may correspond to or may be less than a thickness of a body of the cap plate. The body of the cap plate is arranged between the lateral sides and comprises the inner and the outer side. In case the thickness of the protrusion corresponds to the thickness of the body, the cap plate remains to be easily produceable, e.g. by stamping or punching. If the thickness of the protrusion is less than the thickness of the body, a step or ledge may be present between the protrusion and the inner side, which may further help positioning the cap plate in the opening. The step or ledge preferably faces or abuts at an inner side of the case that delimits a volume in that the electrode assembly is to be arranged.

The thickness of the protrusion may be constant or may decrease as the protrusion extends away from the lateral side on which it is arranged. Protrusions with constant thicknesses can be produced easily, again e.g. by stamping or punching the cap plate.

Manufacturing a cap plate with a changing and in particular with a decreasing thickness may be more complicated. Yet, weldability by be improved by adapting the thickness of the protrusion such that it decreases as the protrusion extends away from the lateral side on which it is arranged.

The protrusion may comprise an upper surface that is inclined with respect to the outer side. Hence, the upper surface does not project over the outer surface of the cap plate, providing for a cap plate that can easily be handled. Furthermore, in case the upper surface is inclined, an inner surface of the protrusion may be parallel to the edge section and e.g. to the inner side of the cap plate, such that the protrusion can be safely placed on the edge section.

Alternatively, the upper surface may be parallel and in particular flush with the outer side of the body of the cap plate. Not only that such a cap plate can be easily made by punching or stamping. Furthermore, the position of such a cap plate in the opening can be inspected not only visually, but moreover tactically, in case the upper surface and / or the outer side are flush with the edge section in the assebled state of the cap plate in the opening.

At least one projection can be formed in the groove in order to provide for an additional positioning element for assisting the placement of the cap plate in the opening.

Furthermore, the projection can improve weldability of the cap plate and the case.

Preferably, the projection and the protrusion may mesh with each other. Therefore, at least two protrusions may be present at the lateral side and at least one projection may be formed in the groove. Hence, the at least one projection may be arranged between the at least to protrusions in the assembled state of the cap plate. Alternativly, at least two projections may be formed in the groove and at least one protrusion may be present at the lateral side, which may be adapted to mesh with each other in the assembled state. Meshing welding partners can be better welded to each other than not meshing welding partners.

The case and the cap plate are preferably interconnected by a weld seam, wherein a width of the weld seam is larger in the area of the protrusion than in another area of the weld seam. The wider section of the weld seam provides for a stronger weld connection and is automatically generated due to the design of the cap plate or of the cap plate and the edge section as described above.

The wider section of the weld seam is preferably arranged at a center section of one of the lateral sides. If forces act onto the case which seek to deform the case, deformation forces are typically strongest in the middle of the edge section. Arranging the wider section at the center section of one of the lateral sides thus strengthens the battery.

The weld seam preferably continuously extends around the cap plate in a circumferential direction of the circumferential edge section. Therefore, the cap plate is stably connected to the case and may even seal the opening, except for necessary openings, which may be provided e.g. for venting too high pressure inside the case during operation of the battery.

While the cap plate is inserted into the opening of the case to be coupled with the case, an internal circumference of the case comes into contact with an external circumference of the cap plate. The welding seam is formed along a tangent line of the internal circumference of the case and the external circumference of the cap plate.

An electrode terminal may be provided in and e.g. extend through the cap plate and electrically connected to the electrode assembly. The protrusion may hence protrude from the external circumference to be fastened to the groove .

A thickness of the protrusion may be the same as a depth of the groove, and the upper surface of the protrusion section and an upper surface of the edge section of the case may form a flat surface in the assembled state of the cap plate.

The protrusion may have a rectangular cross-section in a length direction in which it extends.

The opening of the case and the cap plate may have a shape of a rectangle having a pair of long lateral sides and a pair of short lateral sides.

In other words: The opening of the case and the cap plate may have a shape of a rectangle having a pair of long sides and a pair of short sides. The case may include the first groove and the second groove formed in the pair of short sides or the pair of long sides. Alternatively, the case may include the first groove and the second groove formed in the pair of short sides and a third groove and a fourth groove formed in the pair of long sides. The cap palte may include the first protrusion and the second protrusion fastened to the first groove and the second groove, respectively, and / or a third protrusion and a fourth protrusion fastened to the third groove and the fourth groove, respectively.

The thickness of the protrusion may be the same as the depth of the groove and then gradually be reduced.

The protrusion section may have a triangular cross-section in its length direction. The triangle may be rectangular, wherein a leg of the triangle extends parallel to the inner or the outer side of the cap plate and the hypotenuse of the triangle faces away from the opening in the assembled state of the cap plate.

In at least one side of the pair of long sides and the pair of short sides, a plurality of grooves and projections may be formed, and the cap plate may be formed with a plurality of protrusions corresponding to the plurality of grooves and fastened thereto.

According to the invention, it is possible to introduce the cap plate in the opening of the case, fasten the cap plate to the opening, and prevent over-insertion of the cap plate into the opening by fastening of a protrusion and a groove facing each other when the cap plate is coupled with the case by forming the groove in the case and the protrusion in the cap plate.

The invention is described hereinafter in greater detail and in an exemplary manner using advantageous embidiments and with reference to the drawings. The described embodiments are only possible configurations, in which, however, the individual features as described above can be provided independently or one another or can be omitted in the drawings:

### BRIEF DESCRIPTION OF THE DRAWINGS

FIG. 1 is a schematic perspective view of a rechargeable battery according to a first exemplary embodiment of the present invention.
FIG. 2 is a cross-sectional view taken along the line II-II of FIG. 1.
FIG. 3 is a partially exploded schematic perspective view of a case and a cap plate of FIG. 1.
FIG. 4 is a schematic top plan view showing that the cap plate is coupled with the case of FIG. 3.
FIG. 5 is a cross-sectional view taken along the line V-V of FIG. 4.
FIG. 6 is a schematic top plan view showing that the cap plate is welded to the case of FIG. 4.
FIG. 7 is a cross-sectional view taken along the line VII-VII of FIG. 6.
FIG. 8 is a schematic top plan view showing that a cap plate is coupled with a case of a rechargeable battery according to a second exemplary embodiment of the present invention.
FIG. 9 is a top plan view showing that the cap plate is welded to the case of FIG. 8.
FIG. 10 is a partially exploded schematic perspective view of a case and a cap plate of a rechargeable battery according to a third exemplary embodiment of the present invention.
FIG. 11 is a top plan view showing that the cap plate is coupled with the case of FIG. 10.
FIG. 12 is a top plan view showing that the cap plate is welded to the case of FIG. 11.
FIG. 13 is a cross-sectional view taken along the line XIII-XIII of FIG. 12.
FIG. 14 is a partially exploded schematic perspective view of a case and a cap plate of a rechargeable battery according to a fourth exemplary embodiment of the present invention.
FIG. 15 is a top plan view showing that the cap plate is coupled with the case of FIG. 14.
FIG. 16 is a top plan view showing that the cap plate is welded to the case of FIG. 15.

### DETAILED DESCRIPTION

The present invention will be described more fully hereinafter with reference to the accompanying drawings, in which exemplary embodiments of the invention are shown. Like reference numerals generally designate like elements throughout the specification.

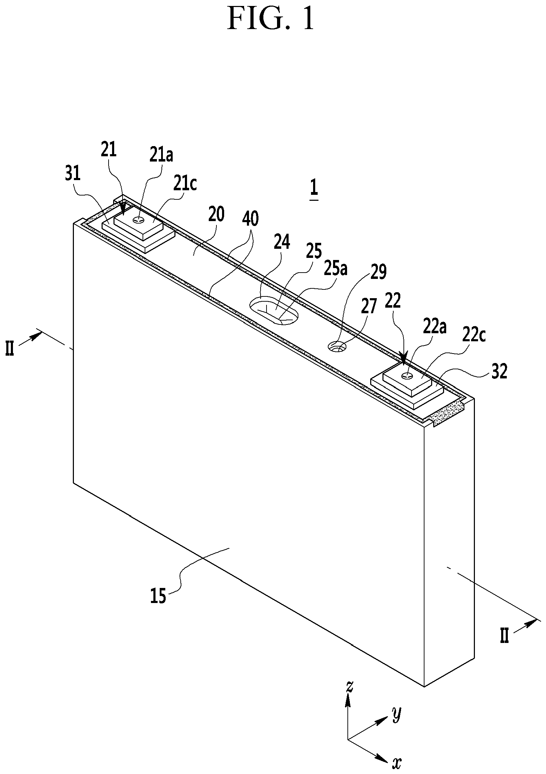

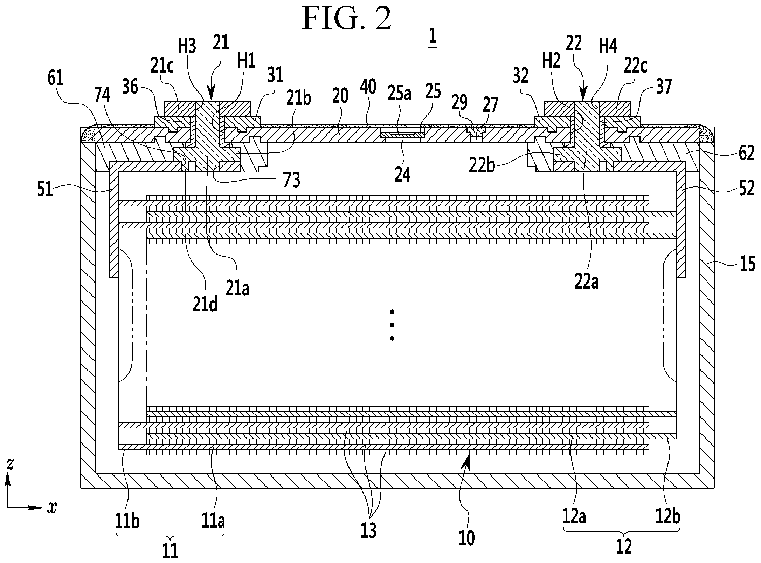

FIG. 1 is a perspective view of a rechargeable battery according to a first exemplary embodiment of the present invention. FIG. 2 is a cross-sectional view taken along the line II-II of FIG. 1. Referring to FIGS. 1 and 2, a rechargeable battery 1 according to the first exemplary embodiment comprises an electrode assembly 10 charging and discharging a current, a case 15 receiving the electrode assembly 10 and an electrolyte solution, a cap plate 20 fastened to an opening of the case 15, a welding seam 40 formed along a tangent line of an internal circumference of the case 15 and an external circumference of the cap plate 20, and electrode terminals 21 and 22 provided on the cap plate 20.

For example, the electrode assembly 10 is formed by disposing electrodes (for example, a negative electrode 11 and a positive electrode 12) on both sides of a separator 13 that is an insulator and winding the negative electrode 11, the separator 13, and the positive electrode 12 in a jelly roll state.

The negative and positive electrodes 11 and 12 include coating units 11a and 12a in which an active material is applied on a current collector of a metal plate, and uncoated regions 11b and 12b formed of the current collector which is not coated with the active material but exposed.

The uncoated region 11b of the negative electrode 11 is formed at an end of the negative electrode 11 along the wound negative electrode 11. The uncoated region 12b of the positive electrode 12 is formed at an end of the positive electrode 12 along the wound positive electrode 12. In addition, the uncoated regions 11b and 12b are disposed at both ends of the electrode assembly 10.

The case 15 has a shape of an approximate cuboid so as to form a space receiving the electrode assembly 10 therein. The opening of the case 15 is formed to have a shape of a rectangle in a side of the cuboid to allow the electrode assembly 10 to be inserted from the outside into an internal space.

The cap plate 20 has the shape of the rectangle corresponding to the opening so that the cap plate 20 is provided in the opening of the case 15 to seal the case 15. For example, the case 15 and the cap plate 20 may be formed of aluminum and welded to each other. That is, after the electrode assembly 10 is inserted into the case 15, the cap plate 20 may be welded to the opening of the case 15.

Further, the cap plate 20 has one or more openings, for example, terminal holes H1 and H2, an electrolyte injection opening 27, and a vent hole 24. The electrode terminals 21 and 22 are provided in the terminal holes H1 and H2 of the cap plate 20, respectively, to be electrically connected to the electrode assembly 10.

That is, the electrode terminals 21 and 22 are electrically connected to the negative electrode 11 and the positive electrode 12 of the electrode assembly 10, respectively. Accordingly, the electrode assembly 10 may be drawn out to the outside of the case 15 through the electrode terminals 21 and 22.

The electrode terminals 21 and 22 include plate terminals 21c and 22c disposed on the outside of the cap plate 20 to correspond to the terminal holes H1 and H2, and rivet terminals 21a and 22a electrically connected to the electrode assembly 10 and fastened to the plate terminals 21c and 22c through the terminal holes H1 and H2.

The plate terminals 21c and 22c have through-holes H3 and H4. The rivet terminals 21a and 22a are inserted into the through-holes H3 and H4 while passing through the terminal holes H1 and H2 at upper ends thereof. The electrode terminals 21 and 22 further include flanges 21b and 22b widely integrated with the rivet terminals 21a and 22a in the cap plate 20.

In the electrode terminal 21 connected to the negative electrode 11, an external insulation member 31 interposed between the plate terminal 21c and the cap plate 20 electrically insulates the plate terminal 21c and the cap plate 20. That is, a state where the cap plate 20 is insulated from the electrode assembly 10 and the negative electrode 11 is maintained.

The insulation member 31 and the plate terminal 21c are coupled with an upper end of the rivet terminal 21a and the upper end is riveted or welded to fasten the insulation member 31 and the plate terminal 21c to the upper end of the rivet terminal 21a. The plate terminal 21c is provided on an external side of the cap plate 20 while the insulation member 31 is interposed therebetween.

In the electrode terminal 22 connected to the positive electrode 12, a conductive top plate 32 interposed between the plate terminal 22c and the cap plate 20 electrically connects the plate terminal 22c and the cap plate 20. That is, a state where the cap plate 20 is electrically connected to the electrode assembly 10 and the positive electrode 12 is maintained.

The top plate 32 and the plate terminal 22c are coupled with the upper end of the rivet terminal 22a and the upper end is riveted or welded to fasten the top plate 32 and the plate terminal 22c to the upper end of the rivet terminal 22a. The plate terminal 22c is provided on the external side of the cap plate 20 while the top plate 32 is interposed therebetween.

Gaskets 36 and 37 are provided between the rivet terminals 21a and 22a of the electrode terminals 21 and 22 and internal surfaces of the terminal holes H1 and H2 of the cap plate 20 to seal a space between the rivet terminals 21a and 22a and the cap plate 20 and electrically insulate the rivet terminals 21a and 22a and the cap plate 20.

The gaskets 36 and 37 further extend between the flanges 21b and 22b and the internal surface of the cap plate 20 to further seal a space between the flanges 21b and 22b and the cap plate 20 and electrically insulate the flanges 21b and 22b and the cap plate 20. That is, the gaskets 36 and 37 prevent leakage of the electrolyte solution through the terminal holes H1 and H2 when the electrode terminals 21 and 22 are provided in the cap plate 20.

Meanwhile, lead tabs 51 and 52 electrically connect the electrode terminals 21 and 22 to the negative and positive electrodes 11 and 12 of the electrode assembly 10, respectively. That is, the lead tabs 51 and 52 are coupled with lower ends of the rivet terminals 21a and 22a and the lower ends are caulked to connect the lead tabs 51 and 52 to the lower ends of the rivet terminals 21a and 22a while the lead tabs 51 and 52 are supported by the flanges 21b and 22b.

Insulation members 61 and 62 are provided between the lead tabs 51 and 52 and the cap plate 20 to electrically insulate the lead tabs 51 and 52 and the cap plate 20. Further, the insulation members 61 and 62 are coupled with the cap plate 20 at a side thereof and surround the lead tabs 51 and 52, the rivet terminals 21a and 22a, and the flanges 21b and 22b at another side thereof, thus stabilizing a connection structure thereof.

The electrolyte solution may be injected through the electrolyte injection opening 27 into the case 15 after the cap plate 20 is coupled with the case 15. After the electrolyte solution is injected, the electrolyte injection opening 27 is sealed by a sealing stopper 29.

The vent hole 24 is sealed by a vent plate 25 so as to exhaust internal pressure of the rechargeable battery 1 and generated gas therethrough. When the internal pressure of the rechargeable battery 1 reaches a predetermined pressure, the vent plate 25 is cut to open the vent hole 24. The vent plate 25 has a notch 25a for inducing cutting.

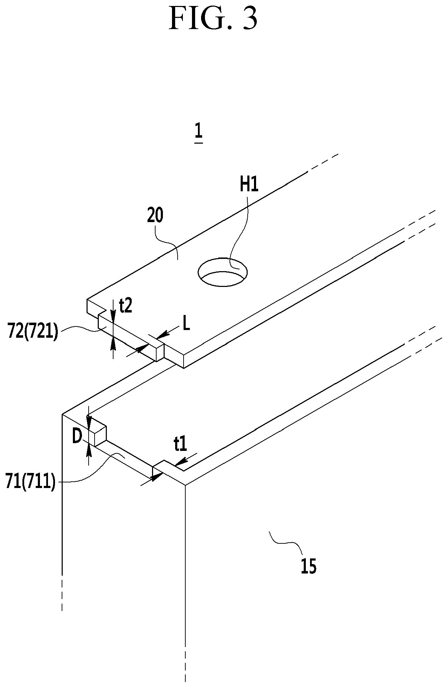

Meanwhile, in the rechargeable battery 1 of the first exemplary embodiment, a groove section 71 is provided in the case 15 and a protrusion section 72 is provided in the cap plate 20 in order to induce safe seating of the cap plate 20 in the opening of the case 15 and prevent over-insertion of the cap plate 20 into the opening when the cap plate 20 is fastened to the opening of the case 15 (see FIG. 3).

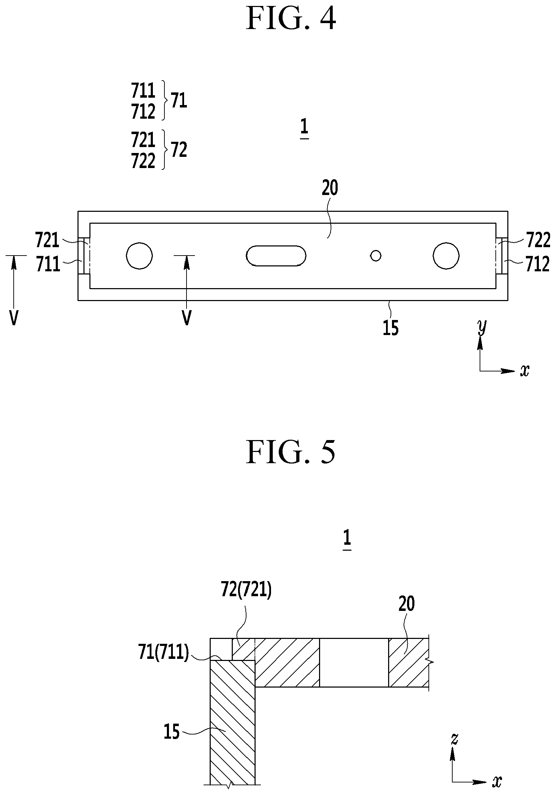

FIG. 3 is a partially exploded perspective view of the case and the cap plate of FIG. 1. FIG. 4 is a top plan view showing that the cap plate is coupled with the case of FIG. 3. FIG. 5 is a cross-sectional view taken along the line V-V of FIG. 4.

Referring to FIGS. 3 to 5, the groove section 71 is formed along the opening of the case 15 and in particular in a circumferential edge section of the case 15 that surrounds the opening, and the protrusion section 72 protruding from the external circumference of a body of the cap plate 20 to be fastened to the groove section 71 is formed in the cap plate 20.

A protrusion length L of the protrusion section 72 is smaller than a thickness t1 of the groove section 71. Accordingly, when the cap plate 20 is provided in the case 15 to fasten the protrusion section 72 to the groove section 71, a portion of the groove section 71 is exposed to the outside of the protrusion section 72. That is, the groove section 71 induces safe seating of the protrusion section 72 and facilitates welding.

A thickness t2 of the protrusion section 72 is the same as a depth D of the groove section 71. Accordingly, an upper surface of the protrusion section 72 and an upper surface of the case 15 form a flat surface, if the cap plate 20 is positioned in the opening. That is, while the protrusion section 72 and the groove section 71 are fastened to each other, the protrusion section 72 and the case 15 form the same flat surface to prevent over-insertion of the protrusion section 72 into the groove section 71.

The protrusion section 72 has a rectangular cross-section along a length direction (x-axis direction) (see FIG. 5). Accordingly, the protrusion section 72 is at least sectionwise or even completely melted during welding. Therefore, the welding seam 40 may be formed around the groove section 71 to have a large area.

The opening of the case 15 and the cap plate 20 has a shape of a rectangle, thus having a pair of long sides and a pair of short sides. The groove section 71 comprises a first groove 711 and a second groove 712 formed at a pair of short sides in the opening of the case 15. The protrusion section 72 comprises a first protrusion 721 and a second protrusion 722 to be fastened to the first groove 711 and the second groove 712, respectively, at the cap plate 20.

That is, fastening of the first groove 711 to the first protrusion 721 and fastening of the second groove 712 to the second protrusion 722 induces fastening of the cap plate 20 to the case 15, and prevents over-insertion of the cap plate 20 into the opening. Further, the cap plate 20 and the case 15 are coupled with each other at both sides in the x-axis direction. Accordingly, balance coupling of the case 15 and the cap plate 20 is feasible at both sides in the x-axis direction.

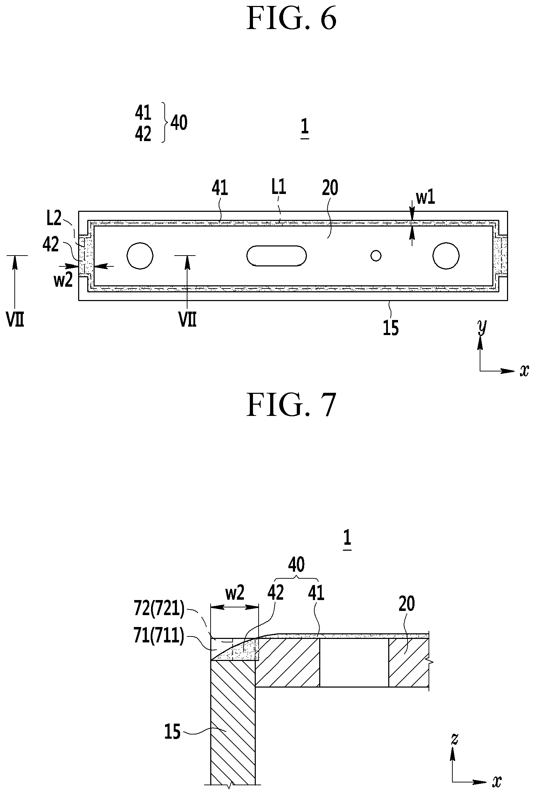

FIG. 6 is a top plan view showing that the cap plate is welded to the case of FIG. 4. FIG. 7 is a cross-sectional view taken along the line VII-VII of FIG. 6. Referring to FIGS. 6 and 7, when the cap plate 20 is coupled with the case 15 and welded, the welding seam 40 is formed along a direction of the circumferential edge section, i.e. along a first tangent line L1 and a second tangent line L2 formed by bringing the internal circumference of the case 15 and the external circumference of the cap plate 20 into contact with each other.

The welding seam 40 comprises a first seam section 41 of a first line width W1 and a second seam section 42 of a second line width W2. The first seam section 41 is formed at an outskirt of, i.e. outside of the groove section 71 (or protrusion section 72) in a pair of long sides and a pair of short sides. The second seam 42 is formed to correspond to the groove section 71 (or protrusion section 72) in a pair of short sides.

The first seam 41 is formed along the first tangent line L1 at which the cap plate 20 and the case 15 is in contact with each other when the cap plate 20 is inserted into the case 15. The second seam 42 is formed along the second tangent line L2 at which the protrusion section 72 is in contact with the groove section 71.

The second line width W2 of the second seam 42 comprises a portion where the protrusion section 72 is melted during welding. Accordingly, the second line width W2 is larger than the first line width W1. That is, the second seam 42 where the protrusion section 72 is melted may further increase a welding ability of the groove section 71 of the case 15 and the cap plate 20 in the short side.

Hereinafter, various exemplary embodiments of the present invention will be described. The same constitution as the first exemplary embodiment and the aforementioned exemplary embodiment will be omitted, and the different constitution will be described.

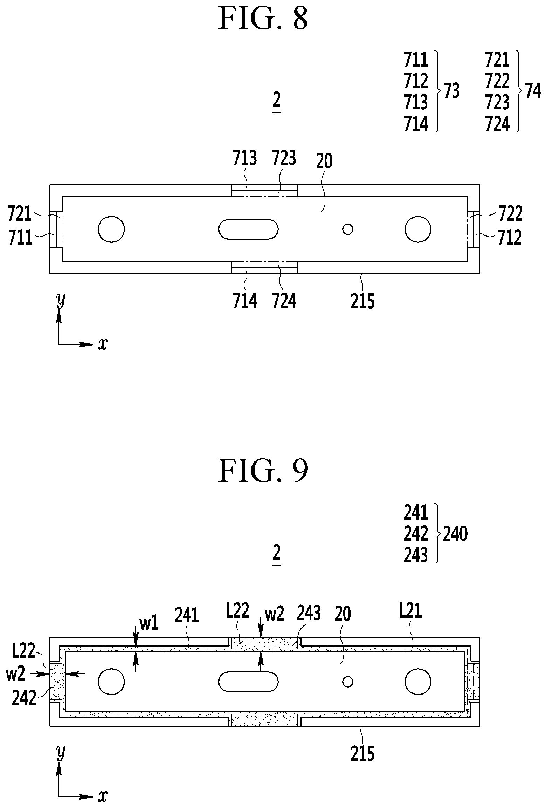

FIG. 8 is a top plan view showing that a cap plate is coupled with a case of a rechargeable battery according to a second exemplary embodiment of the present invention. FIG. 9 is a top plan view showing that the cap plate is welded to the case of FIG. 8.

Referring to FIGS. 8 and 9, in a rechargeable battery 2 according to the second exemplary embodiment, a groove section 73 of a case 215 comprises the first groove 711 and the second groove 712 formed in a pair of short sides, and a third groove 713 and a fourth groove 714 formed in a pair of long sides.

A protrusion section 74 of the cap plate 220 comprises the first protrusion 721 and the second protrusion 722 fastened to the first groove 711 and the second groove 712, respectively, and a third protrusion 723 and a fourth protrusion 724 fastened to the third groove 713 and the fourth groove 714, respectively.

That is, fastening of the first groove 711 and the first protrusion 721, fastening of the second groove 712 and the second protrusion 722, fastening of the third groove 713 and the third protrusion 723, and fastening of the fourth groove 714 and the fourth protrusion 724 induces fastening of the cap plate 220 to the case 215 and prevents over-insertion of the cap plate 220 into the opening. Further, the cap plate 220 and the case 215 are coupled with each other at both sides in an x-axis direction and at both sides in an y-axis direction. Accordingly, balance coupling of the case 15 and the cap plate 20 is feasible at both sides in the x-axis direction and at both sides in the y-axis direction.

The welding seam 240 comprises a first seam section 241 of a first line width W1 and a second seam section 242 of a second line width W2. The first seam section 241 is formed at outskirts of the first groove 711 (or first protrusion 721) and the second groove 712 (or second protrusion 722) in a pair of short sides, and at outskirts of the third groove 713 (or third protrusion 723) and the fourth groove 714 (or fourth protrusion 724) in a pair of long sides.

The second seams 242 and 243 are formed to correspond to the first groove 711 (or first protrusion 721) and the second groove 712 (or second protrusion 722) in a pair of short sides, and the third groove 713 (or third protrusion 723) and the fourth groove 714 (or fourth protrusion 724) in a pair of long sides.

The first seam section 241 is formed along the circumferential direction, along which the circumferential edge section of the case 215 surrounds the opening, i.e. along a first tangent line L21 at which the cap plate 220 and the case 215 are in contact with each other when the cap plate 220 is inserted into the case 215. The second seams 242 and 243 are formed along the circumferential direction, along which the circumferential edge section of the case 215 surrounds the opening, i.e. along a second tangent line L22 at which the protrusion section 74 is in contact with the groove section 73.

The second line width W2 of the second seam sections 242 and 243 comprises a portion where the protrusion section 74 is melted during welding. Accordingly, the second line width W2 is larger than the first line width W1. That is, the second seams 242 and 243 where the protrusion section 74 is melted may further increase a welding ability of the groove section 73 of the case 215 and the cap plate 220 in the short side and the long side.

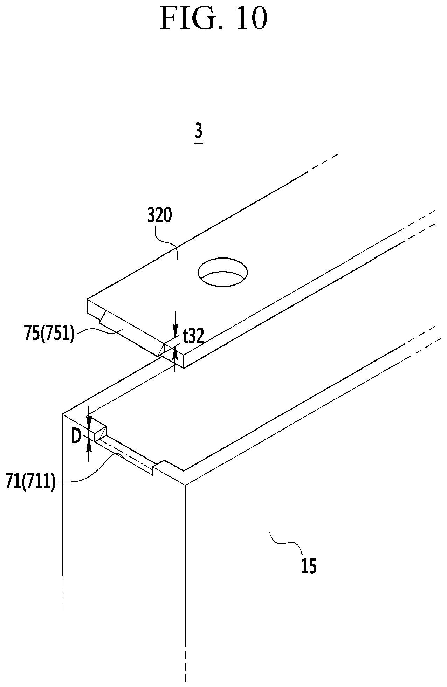

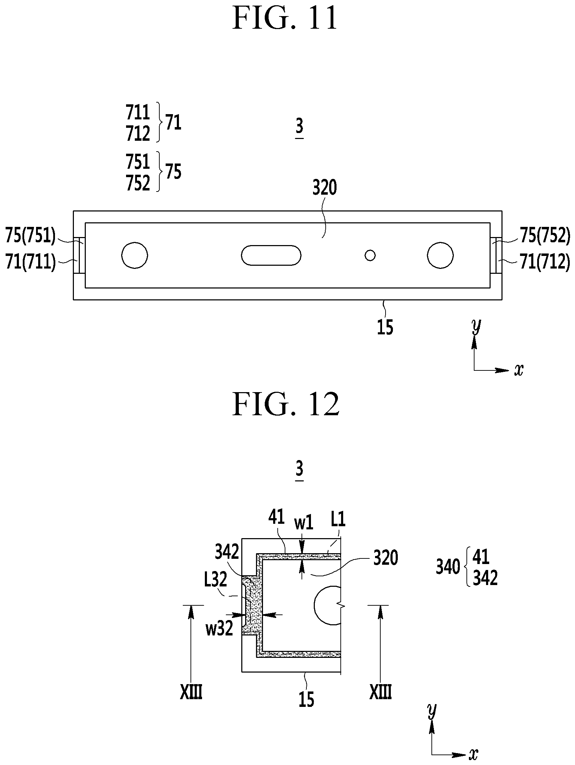

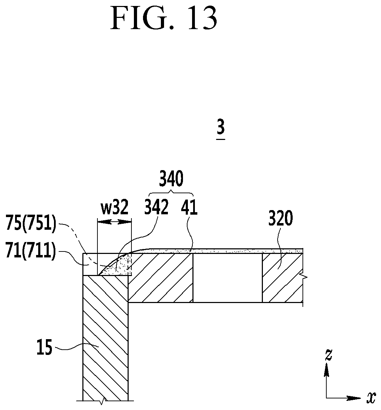

FIG. 10 is a partially exploded perspective view of a case and a cap plate of a rechargeable battery according to a third exemplary embodiment of the present invention. FIG. 11 is a top plan view showing that the cap plate is coupled with the case of FIG. 10. FIG. 12 is a top plan view showing that the cap plate is welded to the case of FIG. 11. FIG. 13 is a cross-sectional view taken along the line XIII-XIII of FIG. 12.

Referring to FIGS. 11 to 13, in a rechargeable battery 3 according to the third exemplary embodiment, a thickness t32 of a protrusion section 75 of a cap plate 320 is the same as a depth D of the groove 711 and is then gradually reduced. That is, the protrusion section 75 is thick at a side adjacent to the body of the cap plate 320, and the thickness decreases away from the cap plate 320. For example, the protrusion section 75 has a right triangular cross-section along of its length direction (x-axis direction).

The protrusion section 75 of the cap plate 320 comprises a first protrusion 751 and a second protrusion 752 fastened to the first groove 711 and the second groove 712, respectively. That is, fastening of the first groove 711 and the first protrusion 751 and fastening of the second groove 712 and the second protrusion 752 induces fastening of the cap plate 320 to the case 15, and prevents over-insertion of the cap plate 320 into the opening. Further, the cap plate 320 and the case 15 are coupled with each other at both sides in the x-axis direction. Accordingly, balance coupling of the case 15 and the cap plate 320 is feasible at both sides in the x-axis direction.

A welding seam 340 comprises the first seam section 41 of the first line width W1 and a second seam section 342 of a second line width W32. The first seam section 41 is formed at an outskirt of the groove section 71 (or protrusion section 75) in a pair of long sides and a pair of short sides. The second seam section 342 is formed to correspond to the groove section 71 (or protrusion section 75) in a pair of short sides.

The first seam 41 is formed along the circumferential direction, i.e. along the first tangent line L1 at which the cap plate 320 and the case 15 are in contact with each other when the cap plate 320 is inserted into the case 15. The second seam 342 is formed along the circumferential direction, i.e. along a second tangent line L32 at which the protrusion section 75 is in contact with the groove section 71.

The second line width W32 of the second seam section 342 comprises a portion where the protrusion section 75 is melted during welding. Accordingly, the second line width W32 is larger than the first line width W1. That is, the second seam 342 where the protrusion section 75 is melted may further increase a welding ability of the groove section 71 of the case 15 and the cap plate 20 in the short side.

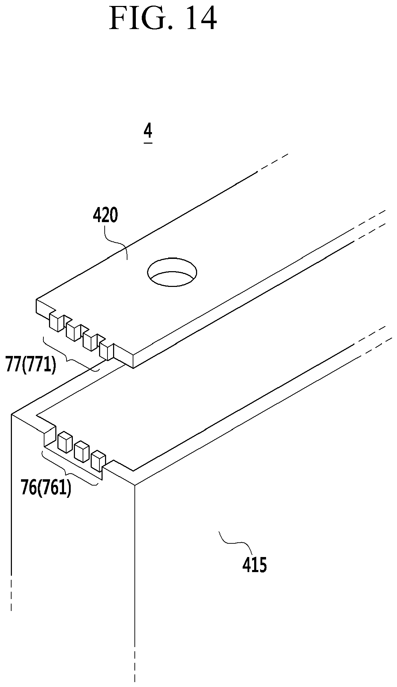

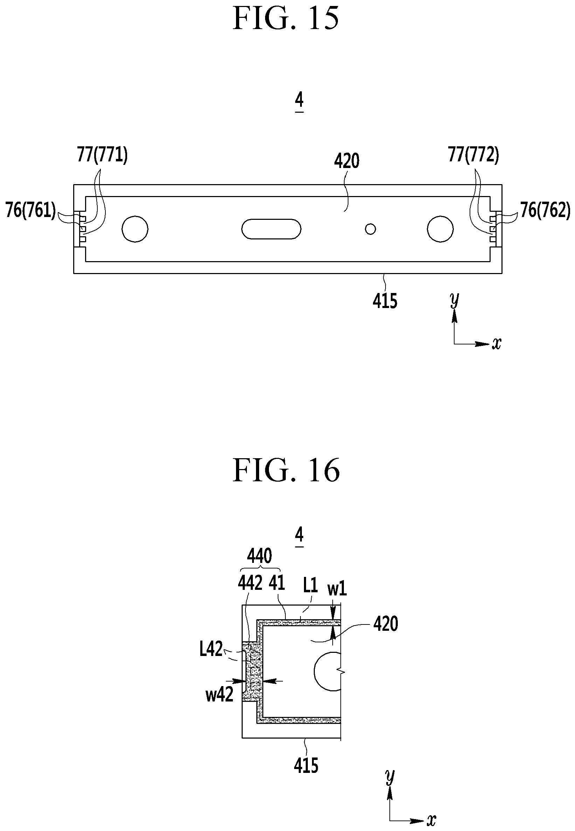

FIG. 14 is a partially exploded perspective view of a case and a cap plate of a rechargeable battery according to a fourth exemplary embodiment of the present invention. FIG. 15 is a top plan view showing that the cap plate is coupled with the case of FIG. 14. FIG. 16 is a top plan view showing that the cap plate is welded to the case of FIG. 15.

Referring to FIGS. 14 to 16, in a rechargeable battery 4 according to the fourth exemplary embodiment, a groove section 76 of a case 415 is formed of a plurality of grooves and protrusions. A protrusion section 77 of a cap plate 420 is formed of a plurality of protrusions and grooves corresponding to a plurality of grooves and protrusions of the groove section 76 and fastened thereto.

The groove section 76 includes at least one projection 761, 762 at each of two opposite lateral sides of the cap plate 420 and the protrusion section 77 comprises first and second protrusions 771 and 772 formed in a pair of short sides in a rectangle of the case 415 and the cap plate 420 coupled with each other. Although not shown in the drawings, the groove section and the protrusion section may be formed in a pair of long sides or in a pair of long sides and a pair of short sides in the rectangle of the case and the cap plate coupled with each other.

That is, fastening of the projection 761 and the protrusion 771 and fastening of the second groove section 762 and the second protrusion section 772 induce fastening of the cap plate 420 to the opening of the case 415, and prevent over-insertion of the cap plate 420 into the opening. Further, the cap plate 420 and the case 415 are coupled with each other at both sides in the x-axis direction. Accordingly, balance coupling of the case 415 and the cap plate 420 is feasible at both sides in the x-axis direction.

The welding seam 440 comprises the first seam section 41 of the first line width W1 and a second seam section 442 of a second line width W22. The first seam section 41 is formed in a pair of long sides, and the second seam 442 is formed to correspond to the groove section 76 (or protrusion section 77) and second groove section 76 (or protrusion section 77) in a pair of short sides.

The first seam section 41 is formed along the circumferential direction, i.e. along the first tangent line L1 at which the cap plate 420 and the case 415 are in contact with each other when the cap plate 420 is inserted into the opening of the case 415. The second seam 442 is formed along the circumferential direction, i.e. along a second tangent line L42 at which the protrusion section 77 is in contact with the groove section 76.

The second line width W42 of the second seam section 442 comprises a portion where the protrusion section 77 and the groove section 76 are melted during welding. Accordingly, the second line width W42 is larger than the first line width W1. That is, the second seam section 442 where the protrusion section 77 and the groove section 76 are melted may further increase a welding ability of the groove section 76 of the case 415 and the cap plate 420 in the short side.

## Claims

1. Rechargeable battery (1) comprising
a case (15), in which an electrode assembly (10) is arranged, the case (15) comprising a circumferential edge section that extends around an opening of the case (15), and
a cap plate (20) inserted in the opening that is welded to the case (15) and that closes the opening, wherein the cap plate (20) is formed with an inner side facing the electrode assembly (10), an outer side opposite the inner side, and lateral sides between the inner and the outer side, and with two long and two short lateral sides,
**characterized in that** the cap plate (20) comprises at least one protrusion (721-724), wherein a length (L) of the protrusion (721-724) is smaller than a wall thickness (t1) of the circumferential edge section, the protrusion (721-724) projecting from one of the lateral sides and parallel to the inner side, and the protrusion (721-724) is arranged at at least one of the short lateral sides.

2. Rechargeable battery (1) according to claim 1, **characterized in that** the circumferential edge section is formed with a groove (711-721) for accommodating the protrusion (721, 722).

3. Rechargeable battery (1, 2) according to claim 1, **characterized in that** at least two protrusions (721-724) are provided, wherein one of the at least two protrusions (721-724) is arranged at one of the lateral sides and another one of the at least two protrusions (721-724) is arranged at the opposite lateral side.

4. Rechargeable battery (2) according claim 1, **characterized in that** at least one protrusion (721-724) projects from each of the lateral sides.

5. Rechargeable battery (1) according to any of claims 1 to 4, **characterized in that** a thickness (t2, t32) of the protrusion (721-724, 751) perpendicular to the inner side corresponds to or is less than a thickness of a body of the cap plate (20).

6. Rechargeable battery (1) according to claim 5, **characterized in that** the thickness (t2) of the protrusion (721-724) is constant.

7. Rechargeable battery (3) according to claim 5, **characterized in that** the thickness (t32) of the protrusion (751) decreases as the protrusion (751) extends away from the lateral side on which it is arranged.

8. Rechargeable battery (3) according to claim 6 or 7, **characterized in that** the protrusion (751, 752) comprises an upper surface that is inclined with respect to the outer side.

9. Rechargeable battery (4) according to any of claims 2 to 8, **characterized in that** at least one projection (761) is formed in the groove (761).

10. Rechargeable battery (1) according to any of claims 1 to 9, **characterized in that** the case (15) and the cap plate (20) are interconnected by a weld seam (40), wherein a width (W1, W2) of the weld seam (40) is larger in the area of the protrusion (721-724) than in another area of the weld seam (40).

11. Rechargeable battery (1) according to claim 10, **characterized in that** a wider section of the weld seam (40) is arranged at a center section of one of the lateral sides.

12. Rechargeable battery (1) according to claim 10 or 11, **characterized in that** the weld seam (40) continuously extends around the cap plate (20) in a circumferential direction of the circumferential edge section.

## Patentansprüche

1. Wiederaufladbare Batterie (1), aufweisend
ein Gehäuse (15), in dem eine Elektrodenanordnung (10) angeordnet ist, wobei das Gehäuse (15) einen Umfangsrandabschnitt, der um eine Öffnung des Gehäuses (15) herum verläuft, aufweist, und
eine Deckplatte (20), die in die Öffnung eingesetzt ist und an das Gehäuse (15) angeschweißt ist und die Öffnung schließt, wobei
die Deckplatte (20) mit einer Innenseite, die der Elektrodenanordnung (10) zugewandt ist, einer Außenseite, die der Innenseite gegenüberliegt, und lateralen Seiten zwischen der Innen- und der Außenseite und mit zwei langen und zwei kurzen lateralen Seiten ausgebildet ist,
**dadurch gekennzeichnet, dass**
die Deckplatte (20) zumindest einen Vorsprung (721-724) aufweist, wobei eine Länge (L) des Vorsprungs (721-724) kleiner ist als eine Wanddicke (t1) des Umfangsrandabschnitts, wobei der Vorsprung (721-724) von einer der lateralen Seiten und parallel zur Innenseite vorsteht,
und
der Vorsprung (721-724) an zumindest einer der kurzen lateralen Seiten angeordnet ist.

2. Wiederaufladbare Batterie (1) nach Anspruch 1, **dadurch gekennzeichnet, dass** der Umfangsrandabschnitt mit einer Nut (711-721) zum Aufnehmen des Vorsprungs (721, 722) ausgebildet ist.

3. Wiederaufladbare Batterie (1, 2) nach Anspruch 1, **dadurch gekennzeichnet, dass** zumindest zwei Vorsprünge (721-724) bereitgestellt werden, wobei einer der zumindest zwei Vorsprünge (721-724) an einer der lateralen Seiten angeordnet ist und ein anderer der zumindest zwei Vorsprünge (721-724) an der gegenüberliegenden lateralen Seite angeordnet ist.

4. Wiederaufladbare Batterie (2) nach Anspruch 1, **dadurch gekennzeichnet, dass** zumindest ein Vorsprung (721-724) von jeder der lateralen Seiten vorsteht.

5. Wiederaufladbare Batterie (1) nach einem der Ansprüche 1 bis 4, **dadurch gekennzeichnet, dass** eine Dicke (t2, t32) des Vorsprungs (721-724, 751), die perpendikulär zur Innenseite ist, einer Dicke eines Körpers der Deckplatte (20) entspricht oder kleiner als diese ist.

6. Wiederaufladbare Batterie (1) nach Anspruch 5, **dadurch gekennzeichnet, dass** die Dicke (t2) des Vorsprungs (721-724) konstant ist.

7. Wiederaufladbare Batterie (3) nach Anspruch 5, **dadurch gekennzeichnet, dass** die Dicke (t32) des Vorsprungs (751) in dem Maß abnimmt, indem sich der Vorsprung (751) von der lateralen Seite, auf der er angeordnet ist, weg erstreckt.

8. Wiederaufladbare Batterie (3) nach Anspruch 6 oder 7, **dadurch gekennzeichnet, dass** der Vorsprung (751, 752) eine Oberseite, die bezüglich der Außenseite schräg ist, aufweist.

9. Wiederaufladbare Batterie (4) nach einem der Ansprüche 2 bis 8, **dadurch gekennzeichnet, dass** zumindest ein Vorsprung (761) in der Nut (761) ausgebildet ist.

10. Wiederaufladbare Batterie (1) nach einem der Ansprüche 1 bis 9, **dadurch gekennzeichnet, dass** das Gehäuse (15) und die Deckplatte (20) durch eine Schweißnaht (40) miteinander verbunden sind, wobei eine Breite (W1, W2) der Schweißnaht (40) im Bereich des Vorsprungs (721-724) größer als in einem anderen Bereich der Schweißnaht (40) ist.

11. Wiederaufladbare Batterie (1) nach Anspruch 10, **dadurch gekennzeichnet, dass** ein breiterer Abschnitt der Schweißnaht (40) an einem mittleren Abschnitt einer der lateralen Seiten angeordnet ist.

12. Wiederaufladbare Batterie (1) nach Anspruch 10 oder 11, **dadurch gekennzeichnet, dass** die Schweißnaht (40) in einer Umfangsrichtung des Umfangsrandabschnitts kontinuierlich um die Deckplatte (20) herum verläuft.

## Revendications

1. Batterie rechargeable (1) comprenant
un boîtier (15), dans lequel est agencé un ensemble d'électrodes (10), le boîtier (15) comprenant une section de bord circonférentielle qui s'étend autour d'une ouverture du boîtier (15), et
une plaque de capuchon (20) insérée dans l'ouverture qui est soudée au boîtier (15) et qui ferme l'ouverture, où
la plaque de capuchon (20) est formée avec un côté intérieur faisant face à l'ensemble d'électrodes (10), un côté extérieur opposé au côté intérieur, et des côtés latéraux entre les côtés intérieur et extérieur, et avec deux côtés latéraux longs et deux côtés latéraux courts, **caractérisée en ce que**
la plaque de capuchon (20) comprend au moins une saillie (721-724), où la longueur (L) de la saillie (721-724) est inférieure à l'épaisseur de paroi (t1) de la section de bord circonférentielle, la saillie (721 -724) faisant saillie depuis l'un des côtés latéraux et étant parallèle au côté intérieur, et la saillie (721-724) est agencée au niveau d'au moins l'un des côtés latéraux courts.

2. Batterie rechargeable (1) selon la revendication 1, **caractérisée en ce que** la section de bord circonférentielle est formée avec une rainure (711-721) pour recevoir la saillie (721, 722) .

3. Batterie rechargeable (1, 2) selon la revendication 1, **caractérisée en ce qu'**au moins deux saillies (721-724) sont prévues, où l'une des au moins deux saillies (721-724) est agencée au niveau de l'un des côtés latéraux et une autre saillie des au moins deux saillies (721-724) est agencée au niveau du côté latéral opposé.

4. Batterie rechargeable (2) selon la revendication 1, **caractérisée en ce qu'**au moins une saillie (721-724) fait saillie depuis chacun des côtés latéraux.

5. Batterie rechargeable (1) selon l'une des revendications 1 à 4, **caractérisée en ce que** l'épaisseur (t2, t32) de la saillie (721-724, 751) perpendiculaire au côté intérieur correspond à ou est inférieure à l'épaisseur d'un corps de la plaque de capuchon (20).

6. Batterie rechargeable (1) selon la revendication 5, **caractérisée en ce que** l'épaisseur (t2) de la saillie (721-724) est constante.

7. Batterie rechargeable (3) selon la revendication 5, **caractérisée en ce que** l'épaisseur (t32) de la saillie (751) diminue à mesure que la saillie (751) s'étend loin du côté latéral sur lequel elle est agencée.

8. Batterie rechargeable (3) selon la revendication 6 ou 7, **caractérisée en ce que** la saillie (751, 752) comprend une surface supérieure qui est inclinée par rapport au côté extérieur.

9. Batterie rechargeable (4) selon l'une des revendications 2 à 8, **caractérisée en ce qu'**au moins une saillie (761) est formée dans la rainure (761).

10. Batterie rechargeable (1) selon l'une des revendications 1 à 9, **caractérisée en ce que** le boîtier (15) et la plaque de capuchon (20) sont interconnectés par un cordon de soudure (40), où la largeur (W1, W2) du cordon de soudure (40) est plus large dans la zone de la saillie (721-724) que dans une autre zone du cordon de soudure (40) .

11. Batterie rechargeable (1) selon la revendication 10, **caractérisée en ce qu'**une section plus large du cordon de soudure (40) est agencée au niveau d'une section centrale de l'un des côtés latéraux.

12. Batterie rechargeable (1) selon la revendication 10 ou 11, **caractérisée en ce que** le cordon de soudure (40) s'étend en continu autour de la plaque de capuchon (20) dans une direction circonférentielle de la section de bord circonférentielle.
